Europäisches Patentamt

European Patent Office

Office européen des brevets

(11) Veröffentlichungsnummer: **0 237 040**

**A2**

(12) **EUROPÄISCHE PATENTANMELDUNG**

(21) Anmeldenummer: 87103461.7

(22) Anmeldetag: 10.03.87

(51) Int. Cl.³: **B 23 C 5/26**

(30) Priorität: 12.03.86 DE 3608141

(43) Veröffentlichungstag der Anmeldung:
16.09.87 Patentblatt 87/38

(84) Benannte Vertragsstaaten:
AT CH DE FR GB IT LI SE

(71) Anmelder: Gebr. Heller Maschinenfabrik GmbH
Postfach 1428 Neuffener Strasse 54
D-7440 Nürtingen(DE)

(72) Erfinder:
Der Erfinder hat auf seine Nennung verzichtet

(74) Vertreter: Jackisch, Walter, Dipl.-Ing. et al,
Menzelstrasse 40
D-7000 Stuttgart 1(DE)

(54) Werkzeug für Werkzeugwechsel-Maschinen.

(57) Das Werkzeug (9) ist für Werkzeugwechsel-Maschinen vorgesehen und hat einen Halter (20), der mit einer Umfangsnut (75) für Greiferteile einer Greifeinrichtung versehen ist. Der Halter (20) weist außerdem einem Kegelschaft (19) auf, mit dem er in eine Aufnahme (18) einer Arbeitsspindel (8) gesteckt werden kann. Das Werkzeug (9) auf dem Halter (20) überdeckt in der Arbeitslage die Umfangsnut (75) und ist unmittelbar an der Arbeitsspindel (18) axial abgestützt sowie lösbar an ihr befestigt. Für den Werkzeugwechsel ist das Werkzeug (9) in eine die Umfangsnut (75) freigebende Stellung gegenüber dem Halter (20) axial verschiebbar. Für hohe Zerspanungsleistungen ausgelegte und auch große und schwere Werkzeuge (9) lassen sich zuverlässig an der Arbeitsspindel (8) anbringen, wobei der Halter (20) das Werkzeug (9) zentriert. Zum Werkzeugwechsel wird das Werkzeug (9) verschoben, so daß die Greifeinrichtung den Halter (20) erfassen kann.

./...

Fig.3

Patentanwalt
Dipl.-Ing. W. Jaeniche. 0237040
Menzelstr. 40, 7000 Stuttgart

Gebr. Heller Maschinenfabrik
Gesellschaft mit beschränkter Haftung
Neuffener Str. 54
7440 Nürtingen

A 1-87 257/soo
09.03.1987

1.

## Werkzeug für Werkzeugwechsel-Maschinen

Die Erfindung betrifft ein Werkzeug für
Werkzeugwechsel-Maschinen nach dem Oberbegriff des
Anspruches 1.

Bei bekannten Werkzeugen greifen Greiferteile der
Greifeinrichtung beim Werkzeugwechsel in die Umfangsnut des
Halters ein. In der Aufnahme der Arbeitsspindel werden dann
die Halter zentriert und mit der in der Arbeitsspindel
untergebrachten Spanneinrichtung gespannt. Auf diese Weise
können aber nur verhältnismäßig kleine und gewichtsmäßig
leichte Werkzeuge an der Arbeitsspindel gehaltert werden,
die für kleine Zerspanungsleistungen vorgesehen sind. Für
schwere Zerspanungen ist eine sichere Plananlage des
Werkzeuges an der Stirnseite der Arbeitsspindel notwendig.
Der Halter dient hierbei nur zur Zentrierung des
Werkzeuges, das noch mit Schrauben an der Arbeitsspindel
befestigt wird. Bei solchen Werkzeugen mit Planlage ist es
nicht möglich, den Werkzeugwechsel durch die für den
Standardwerkzeugwechsel übliche Greifeinrichtung
vorzunehmen. In diesem Falle muß der Werkzeugwechsel von
Hand, gegebenenfalls unter Zuhilfenahme eines Hebezeuges
oder dgl., durchgeführt werden, was zeitaufwendig ist.

Beim gattungsgemäßen Werkzeug (US-PS 43 54 305) wird das
Werkzeug mit dem Halter in die Aufnahme der Arbeitsspindel
gesteckt, an der das Werkzeug axial abgestützt und mit
Bolzen befestigt ist. Die Arbeitsspindel besteht aus einer
Spindelhülse und einer axial verschiebbaren Pinole, welche
die kegelförmige Aufnahme aufweist. Zum Festspannen des
Halters bzw. zum Auswechseln des Werkzeuges muß die Pinole axial gegenüber der Spindelhülse verschoben werden, damit die Umfangsnut des Halters für die Greifeinrichtung zugänglich ist. In der Arbeitslage des Werkzeuges wird die Umfangsnut von der Spindelhülse der Arbeitsspindel überdeckt. Das Werkzeug kann nur an solchen Werkzeugmaschinen eingesetzt werden, bei denen eine Pinole, also eine axial verschiebbare Spindel, vorgesehen ist. Die axial verschiebbare Pinole erfordert darüber hinaus einen erheblichen konstruktiven Aufwand an der Werkzeugmaschine.

Der Erfindung liegt die Aufgabe zugrunde, das gattungsgemäße Werkzeug, das an der Planfläche der Arbeitsspindel anliegt und an ihr befestigt ist, so auszubilden, daß es in konstruktiv einfacher Weise an einer Arbeitsspindel ohne Pinole befestigt werden kann. Insbesondere soll das gattungsgemäße Werkzeug an einer Spindel mit einem Spindelkopf nach DIN 2079 befestigt werden können.

Diese Aufgabe wird beim gattungsgemäßen Werkzeug erfindungsgemäß mit den kennzeichnenden Merkmalen des Anspruches 1 gelöst.

Das erfindungsgemäße Werkzeug ist so ausgebildet, daß es in der Arbeitslage, in der es an der Arbeitsspindel befestigt ist, die Umfangsnut des Halters überdeckt. Das Werkzeug kann aus seiner Arbeitslage auf dem Halter in die für den Werkzeugwechsel vorgesehene Lage verschoben werden. Die Arbeitsspindel selbst ist für den Werkzeugwechsel nicht axial verschiebbar. Der Halter bleibt während dieses Verschiebevorganges in der Arbeitspindel eingespannt, wodurch sich der Werkzeugwechsel besonders einfach gestaltet. Der Formschlußteil wird für den Werkzeugwechsel gelöst und zusammen mit dem Werkzeug gegenüber dem Halter axial verstellt. Da die Umfangsnut im Bereich außerhalb der Arbeitsspindel liegt, wird sie nach dem Verstellen des Formschlußteiles und des Werkzeuges für die
Greifeinrichtung zugänglich. Infolge der erfindungsgemäßen
Ausbildung kann die Arbeitsspindel konstruktiv sehr einfach
ausgebildet sein, weil sie selbst nicht axial verschiebbar
sein muß bzw. keine Pinole benötigt. Vorzugsweise kann das
erfindungsgemäße Werkzeug für Spindeln mit einem
Spindelkopf nach DIN 2079 verwendet werden. Das
erfindungsgemäße Werkzeug kann großflächig an der
Arbeitsspindel axial abgestützt und an ihr befestigt
werden. Dadurch lassen sich Werkzeuge, die für hohe
Zerspanungsleistungen ausgelegt und auch groß und schwer
sind, zuverlässig an der Arbeitsspindel anbringen. Mit dem
Halter wird das Werkzeug zentriert, wobei es infolge seiner
unmittelbaren Anlage an der Arbeitsspindel einen genauen
Planlauf hat. Das erfindungsgemäße Werkzeug läßt sich
innerhalb kürzester Zeit wechseln, so daß die Ausfallzeiten
sehr gering sind.

Weitere Merkmale der Erfindung ergeben sich aus den
weiteren Ansprüchen, der Beschreibung und den Zeichnungen.

Die Erfindung wird anhand zweier in den Zeichnungen dargestellter Ausführungsbeispiele näher erläutert. Es zeigen

Fig. 1      in schematischer Darstellung eine Werkzeugwechsel-Bearbeitungsmaschine, in
der ein erfindungsgemäßes Werkzeug eingespannt werden kann,

Fig. 2      eine Stirnansicht des Halters des erfindungsgemäßen Werkzeuges entsprechend
der Linie II-II in Fig. 3,

Fig. 3      in verkleinerter Darstellung einen
Schnitt längs der Linie III-III in Fig.
2, wobei in der oberen Hälfte das Werkzeug in der Arbeitsstellung und in der
unteren Hälfte in der Werkzeugwechselstellung dargestellt ist,

Fig. 4      einen Schnitt längs der Linie IV-IV

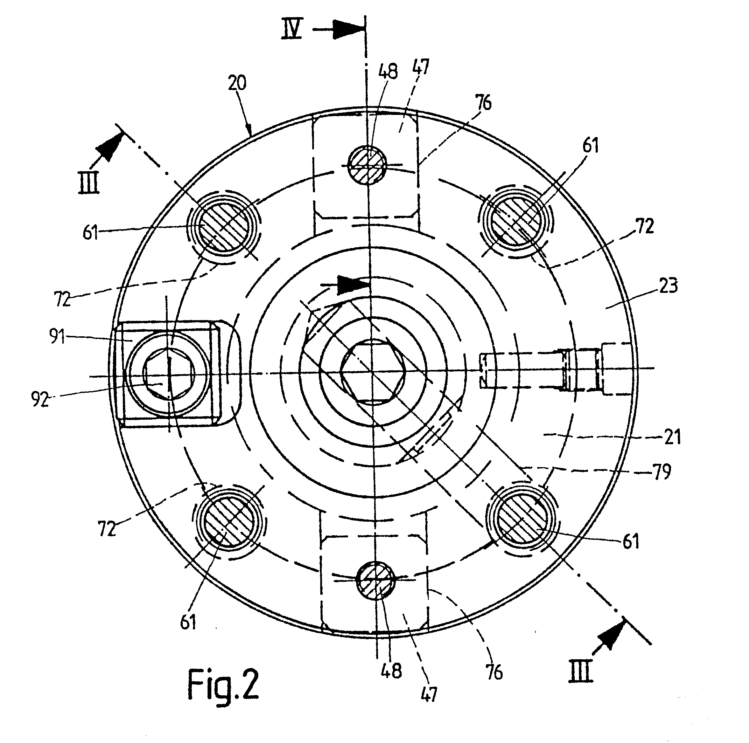

in Fig. 2,

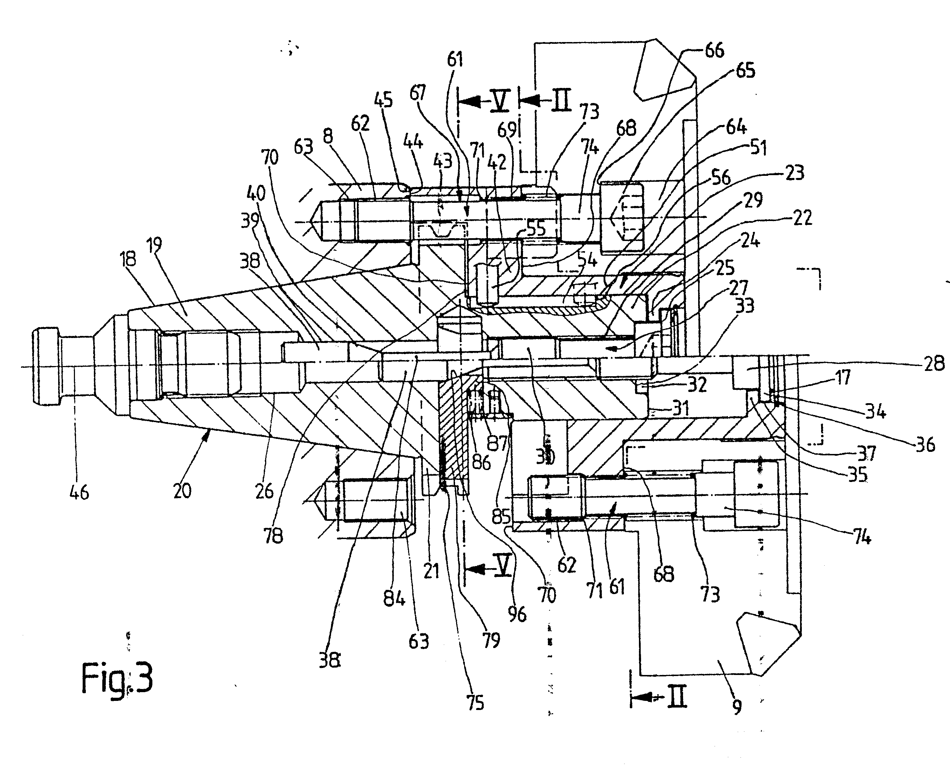

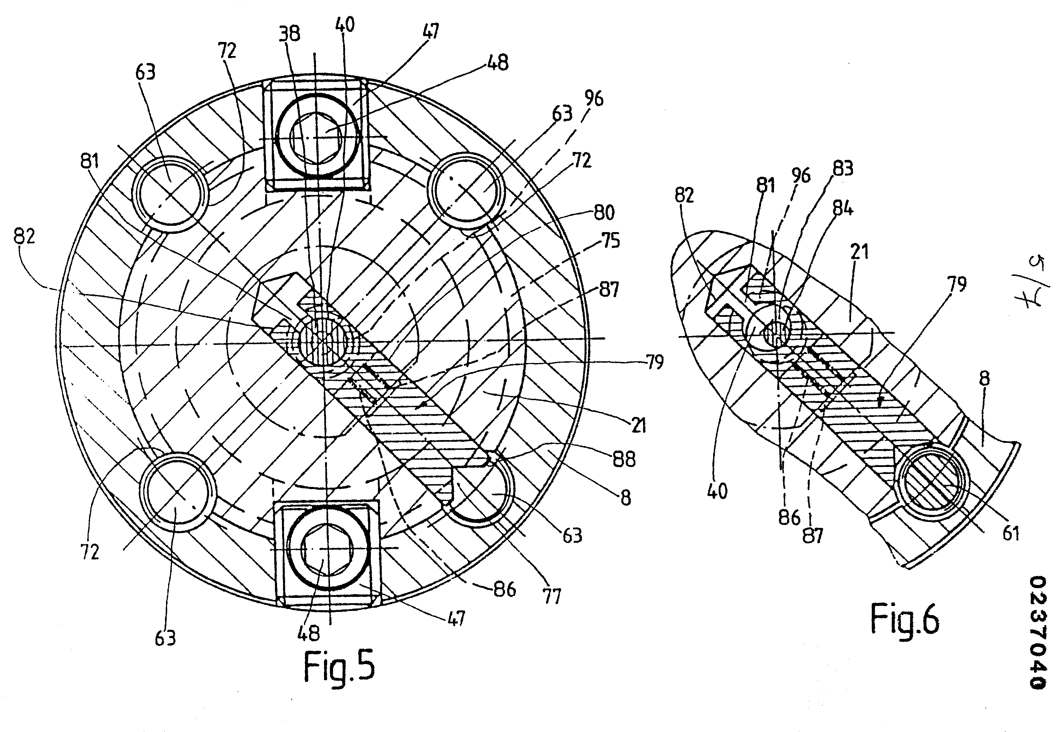

Fig. 5      in vergrößerter Darstellung einen
Schnitt längs der Linie V-V in Fig. 3,
bei der ein Schieber in Wechselstellung
des Halters dargestellt ist,

Fig. 6      einen Teilschnitt längs der Linie V-V
in Fig. 3, wobei der Schieber in angeschraubter Stellung des Halters dargestellt ist,

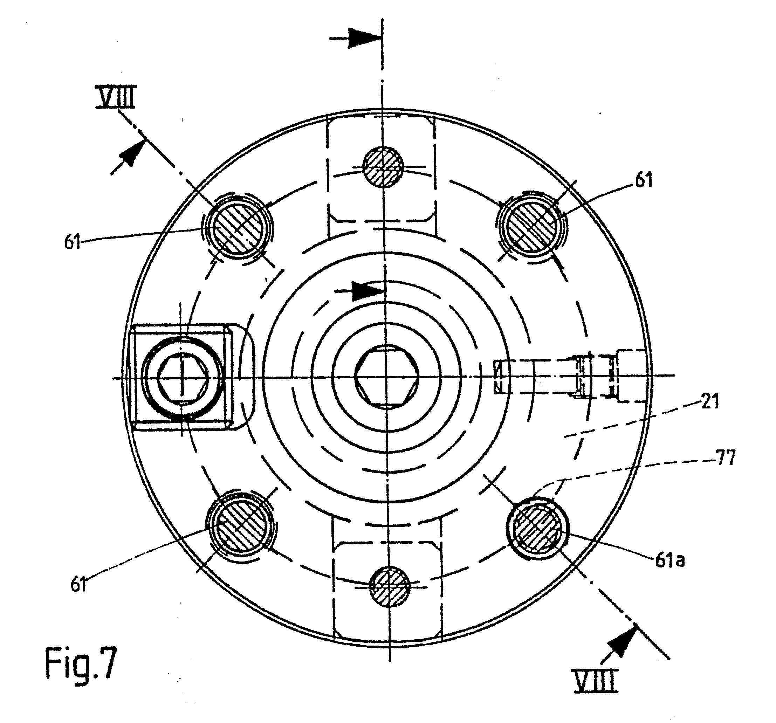

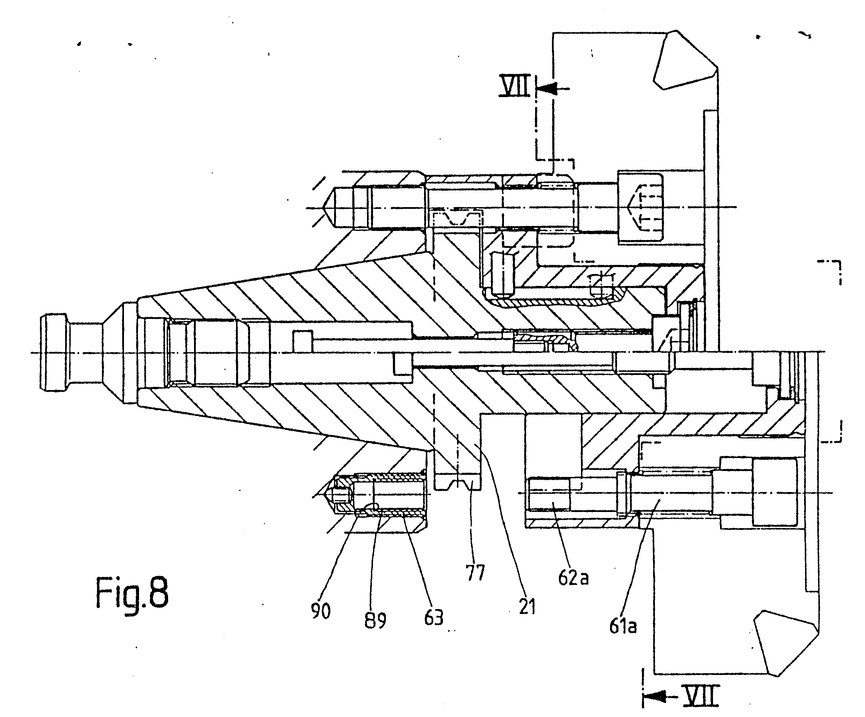

Fig. 7          eine Stirnansicht einer weiteren Ausführungsform eines erfindungsgemäßen
               Werkzeuges entsprechend der Linie
               VII-VII in Fig. 8,

Fig. 8          einen Schnitt längs der Linie VIII-VIII
               in Fig. 7.


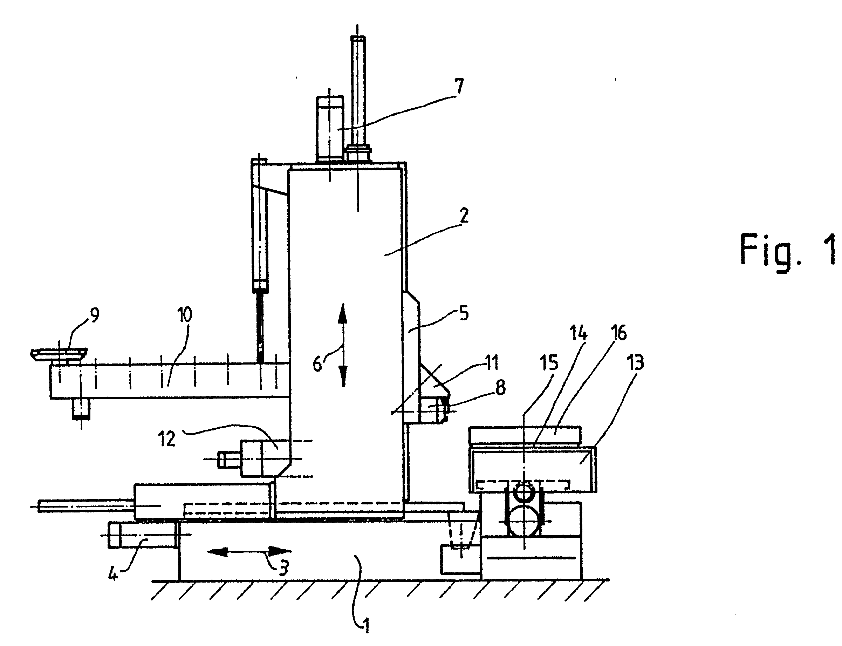

Die Werkzeugwechsel-Bearbeitungsmaschine gemäß Fig. 1 ist
eine Bohr- und Fräsmaschine mit einer automatischen
Werkzeugwechseleinrichtung, in der Werkstücke bearbeitet
werden. Die Maschine hat ein Maschinenbett 1, auf dem ein
Maschinenständer 2 in Richtung des Doppelpfeiles 3 verschiebbar ist. Am Maschinenbett 1 ist ein Antrieb 4 zum
Verstellen des Maschinenständers 2 in Verschieberichtung
3 vorgesehen. Ein Schlitten 5 ist am Maschinenständer 2
senkrecht zur Verschieberichtung 3 in Richtung des Doppelpfeiles 6 verschiebbar. Zum Antrieb des Schlittens 5 ist
auf dem Maschinenständer 2 ein Schlittenmotor 7 vorgesehen. Der Schlitten 5 trägt eine Arbeitsspindel 8, in
die der in den Fig. 2 bis 6 dargestellte Halter zur Aufnahme eines Werkzeuges 9 eingespannt werden kann. Die
Werkzeuge 9 sitzen in einem Werkzeugmagazin 10, das auf
der gegenüberliegenden Seite des Schlittens 5 zusammen
mit ihm verfahrbar vorgesehen ist. Aus dem Magazin 10
werden die jeweiligen Werkzeuge 9 mittels einer an sich
bekannten Greifeinrichtung 11 entnommen und in die Arbeitsspindel 8 eingesetzt. Zum Antrieb der Arbeitsspindel 8
dient ein Motor 12, der am Schlitten 5 vorgesehen ist.

Im Bereich vor dem Maschinenständer 2 befindet sich ein
Quertisch 13, der senkrecht zur Zeichenebene verschiebbar
ist. Auf ihm ist ein Rundtisch 14 vorgesehen, der um eine
vertikale Achse 15 drehbar ist. Auf dem Rundtisch 14 werden Paletten 16 mit den zu bearbeitenden Werkstücken festgespannt.

Die beschriebene Werkzeugwechselmaschine ist an sich bekannt und muß nicht notwendigerweise einen Rundtisch 14
aufweisen. Auch kann die Aufteilung der Bewegungsachsen
anderweitig ausgeführt sein. Ferner kann das Werkzeugmagazin 10 und der Werkzeugwechsler auf andere Weise angeordnet sein.

Die Arbeitsspindel 8 hat eine kegelförmige Aufnahme 18
(Fig. 3) für einen kegelförmigen Schaft 19 eines Halters
20. Er hat einen radial nach außen gerichteten Flansch
21, der den Schaft 19 von einem Zylinderteil 22 trennt,
auf dem eine Lagerbuchse 23 verschiebbar gelagert ist. Sie
hat einen endseitigen, radial nach innen gerichteten
Flansch 24, der eine zentrale Öffnung 25 aufweist. Auch
der Halter 20 ist mit einer ihn durchsetzenden zentralen
Bohrung 26 versehen, in der eine Schraube 27 untergebracht
ist. Sie ragt teilweise mit ihrem Kopf 28 aus der Bohrung 26.
Der Halter 20 weist     im Bereich des Zylinderteiles
22 ein     Innengewinde 29 auf, in das die Schraube 27
mit einem Schraubteil 30 geschraubt ist. Er ist wesentlich
kürzer als das Innengewinde 29, das etwa bis zum Flansch
21 des Halters 20 reicht. Der Zylinderteil 22 ist an seiner
Stirnseite 31 mit einer zentralen Vertiefung 32 versehen,
die in die Bohrung 26 ragt und bis zu der das Innengewinde
29 verläuft.Die Schraube 27 ragt in eingeschraubtem Zustand
mit ihrem Kopf 28 in die Vertiefung 32 und liegt am Boden
33 der Vertiefung an (obere Hälfte in Fig. 3).

Die Schraube 27 ist über ihren Kopf 28 formschlüssig mit
dem Flansch 24 der Lagerbuchse 23 verbunden. Als Formschlußteil hat der Schraubenkopf 28 einen Bund 34, der zwischen einem Bund 35 des Flansches 24 und einem Distanzring 17 sowie
einem Sicherungsring 36 liegt,der in die Innenwandung 37 der
Lagerbuchse.23 eingesetzt ist.

Am freien Ende ist die Schraube 27 mit einem Endstück 38
versehen, das mit einer Zylinderfläche 39 an der Wandung
der Bohrung 26 des Halters 20 geführt ist. An der dem Schraubteil 30 zugewandten Seite ist das
Endstück 38 mit einer auf dem Mantel eines gedachten, sich
in Richtung auf die Stirnseite des Endstückes öffnenden
Kegels liegenden Fläche 40 versehen.

Die Lagerbuchse 23 hat an ihrem vom Flansch 24 abgewandten
Ende einen weiteren, radial nach außen gerichteten Flansch
42, der am radial äußeren Ende in einen Zylinderteil 43
übergeht. Sein Innendurchmesser ist größer als der Außendurchmesser des Flansches 21 des Halters 20. Wenn das
Werkzeug 9, das im Ausführungsbeispiel ein Fräser ist,
an der Arbeitsspindel 8 befestigt ist, übergreift der
Zylinderteil 43 der Lagerbuchse 23 den Flansch 21 und
liegt außerdem mit seiner Stirnseite 44 an der Stirnseite
45 der Arbeitsspindel 8 an (obere Hälfte in Fig. 3). Beide
Stirnseiten 44, 45 liegen senkrecht zur Achse 46 des
Halters 20 bzw. der Arbeitsspindel 8. Mittels der Lagerbuchse 23 wird somit eine einwandfrei Plananlage des
Werkzeuges 9 an der Arbeitsspindel 8 erreicht.

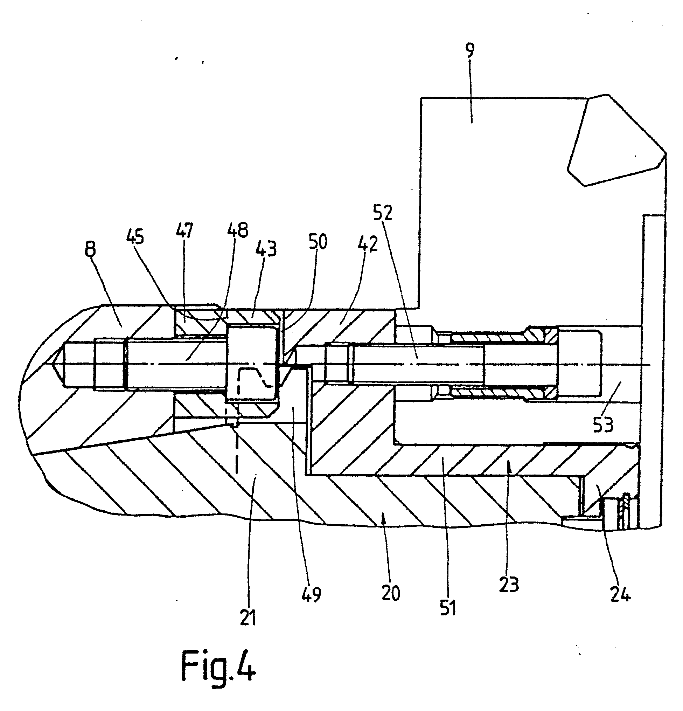

Die Stirnseite 45 der Arbeitsspindel 8 weist zwei Mitnehmersteine 47 auf (Fig. 2 und 4), die mit Schrauben 48 an der
Arbeitsspindel befestigt sind. Die Mitnehmersteine 47
können entsprechend DIN 2079 ausgebildet sein. Der Flansch
21 des Halters 20 und der Zylinderteil 43 der Lagerbuchse 23 sind jeweils mit einer Ausnehmung 49 und 50 versehen
(Fig. 4), in welche einer der Mitnehmersteine 47 in Umfangsrichtung des Flansches bzw. des Zylinderteiles formschlüssig eingreift. Der zweite Mitnehmerstein 47 ist
ohne Formschluß zum Halter 20 und zur Lagerbuchse 23 zur
Vermeidung einer Unwucht der Arbeitsspindel 8 vorgesehen.

Das Werkzeug 9 sitzt auf dem zwischen den beiden Flanschen
24 und 42 sich erstreckenden Zylinderteil 51 (Fig. 3) der
Lagerbuchse 23 und ist an der Lagerbuchse mit Schrauben
52 (Fig. 4) angeschraubt, die in der Einbaulage versenkt
in Durchgangsbohrungen 53 des Werkzeuges 9 liegen. Das
Werkzeug 9 wird über einen Nutenstein 91, welcher am
Flansch 42 mit einer Schraube 92 befestigt ist, formschlüssig mit der Lagerbuchse 23 verbunden.

Das Werkzeug 9 mit der angeschraubten Lagerbuchse 23
kann auf dem Zylinderteil 22 des Halters 20 axial verschoben werden. Zur Befestigung an der Arbeitsspindel 8
wird die aus Werkzeug 9 und Lagerbuchse 23 bestehende
Einheit mit Schrauben 61 an der Arbeitsspindel befestigt.
Sie sind über den Umfang der Lagerbuchse 23 gleichmäßig
verteilt angeordnet (Fig. 2). Die Schrauben 61 weisen
lediglich am freien Ende einen Gewindeabschnitt 62 auf,
mit dem sie jeweils in eine Sacklochbohrung 63 in der
Stirnseite 45 der Arbeitsspindel 8 geschraubt werden
(obere Hälfte in Fig. 3). Das Werkzeug 9 hat für die
Schrauben 61 jeweils eine Durchgangsbohrung 64, in welcher
der Kopf 65 der Schrauben 61 in der Einbaulage versenkt
liegt. Wie Fig. 3 in der oberen Hälfte zeigt, liegt der
Schraubenkopf 65 an einer radial nach innen verlaufenden
Schulterfläche 66 innerhalb der Durchgangsbohrung 64 in
der Einbaulage an. Sie wird am Übergang von einem im
Durchmesser größeren zu einem im Durchmesser kleineren Abschnitt der Durchgangsbohrung gebildet. Die Schrauben
61 durchsetzen außerdem Durchgangsbohrungen 67 im
Zylinderteil 43 der Lagerbuchse 23. Der an die dem Werkzeug 9 zugewandte Stirnseite 68 des Zylinderteiles 43
der Lagerbuchse 23 anschließende Endbereich 69 der Durchgangsbohrung 67 hat Innengewinde, während der restliche
Teil der Durchgangsbohrung gewindefrei ist. Dadurch wird
im Bereich zwischen den beiden Stirnseiten 68 und 70
des Flansches 42 bzw. des Zylinderteiles 43 der Lagerbuchse 23 in den Durchgangsbohrungen 67 jeweils ein Absatz 71 gebildet, an dem der Gewindeabschnitt 62 der
Schrauben 61 bei abgenommenem Werkzeug 9 zur Anlage kommt
(untere Hälfte in Fig. 3). Bei Bedarf kann der Gewindeabschnitt 62 durch den Endbereich 69 der Durchgangsbohrungen 67 herausgeschraubt werden.

Im Bereich der Schrauben 61 ist der Flansch 21 des
Halters 20 an seiner Außenseite mit Aussparungen
72 (Fig. 2) versehen.

Jede Schraube 61 ist von einer Druckfeder 73 umgeben
(Fig. 3), die das Lösen der Schrauben erleichtert. Die
Druckfedern 73 stützen sich mit einem Ende an einem an
den Schraubenkopf 65 anschließenden Bund 74 und mit ihrem
anderen Ende an der Stirnseite 68 des Flansches 42 bzw.
des Zylinderteiles 43 der Lagerbuchse 23 ab.

Der Flansch 21 des Halters 20 weist eine über seinen Umfang verlaufende Rille 75 auf, in die Greifzangen der
Greifeinrichtung 11 eingreifen können, um den Halter 20
in die Aufnahme 18 der Arbeitsspindel 8 einsetzen bzw.
aus ihr herausziehen zu können. Die Rille 75 ist entsprechend DIN 69871, Teil 1 ausgebildet. Für die Mitnehmersteine 47 sind am Umfang des Flansches 21 diametral einander
gegenüberliegend zwei annähernd rechteckige, randoffene Ausnehmungen 76 (Fig. 2) vorgesehen. Außerdem ist am Umfang des Flansches 21 eine Kerbe 77 (Fig. 5 ) entsprechend DIN 69871, Teil 1 vorgesehen. In sie greift eine an der Greifzange der Greifeinrichtung 11 vorgesehene Arretierung ein, um den Halter 20 beim Erfassen mit der Greifeinrichtung gegen Verdrehen zu sichern.

Anstelle der Umfangsrille 75 kann der Halter 20 für den Werkzeugwechsel mittels der Greifeinrichtung 11 auch entsprechend DIN 69871, Teil 2 ausgebildet sein.

Zum Einspannen des Werkzeuges 9 in die Aufnahme 18 der Arbeitsspindel 8 nimmt das Werkzeug 9 die in Fig. 3 in der unteren Hälfte dargestellte Lage ein, in der die Lagerbuchse 23 auf dem Zylinderteil 22 des Halters 20 zurückgeschoben ist. Die Schrauben 61 liegen mit ihrem Gewindeabschnitt 62 am Absatz 71 der Durchgangsbohrung 67 der Lagerbuchse an. Die zentrale Schraube 27 ist so weit zurückgeschraubt, daß ihr Endstück 38 mit der Kegelfläche 40 an einer Kegelfläche 96 eines weiter unten noch zu beschreibenden Schiebers 79 anliegt. Der Zylinderteil 22 des Halters 20 ist mit einer axial verlaufenden Vertiefung 54 (Fig. 3) versehen, in der ein radial liegender Stift 55 geführt ist, der in der Lagerbuchse 23 vorgesehen ist. In der zurückgeschobenen Lage der Lagerbuchse 23 liegt der Stift 54 an einer Endwand 56 der Vertiefung 54 an (strichpunktierte Linie in Fig. 3).Da die Lagerbuchse 23 zurückgeschoben ist, liegt die Umfangsrille 75 frei, so daß die Greifeinrichtung 11 in die Rille eingreifen kann. Das Werkzeug 9 mit dem Halter 20 wird dann in die Aufnahme 18 der Arbeitsspindel 8 gesteckt und der Halter in bekannter Weise mit einer Spanneinrichtung in der Arbeitsspindel festgespannt. Anschließend wird die zentrale Schraube 27 zurückgedreht, wobei über den Formschluß 34 bis 36 die Lagerbuchse 23 und somit das über die Schrauben 52 fest mit ihr verbundene Werkzeug 9 mitgenommen werden. Sobald
die Lagerbuchse 23 mit ihrer Stirnseite 44 an der Stirnseite 45 der Arbeitsspindel 8 zur Anlage kommt, werden
die Schrauben 61 in die Gewindebohrungen 63 der Arbeitsspindel geschraubt und die Lagerbuchse 23 mit dem Werkzeug
fest gegen die Arbeitsspindel gespannt. In der Einbaulage
hat die Stirnseite 70 des Flansches 42 der Lagerbuchse 23
Abstand von der benachbarten Stirnseite 78 des Flansches
21 des Halters 20. Der Stift 55 nimmt die in Fig. 3 mit
ausgezogenen Linien dargestellte Lage ein. Die Schraubenköpfe 65 liegen an den Schulterflächen 66 in den Durchgangsbohrungen 64 des Werkzeuges 9 an. Die Druckfedern
73 sind zwischen dem Bund 74 der Schrauben 61 und der benachbarten Stirnseite 68 der Lagerbuchse 23 zusammengedrückt. Das Werkzeug 9 wird über den Halter 20 in der Aufnahme 18 der Arbeitsspindel 8 einwandfrei zentriert. Mit
den gegeneinander gedrückten Stirnseiten 44, 45
wird das Werkzeug 9 für einen genauen Planlauf
einwandfrei ausgerichtet. Das Einsetzen des
Halters 20 in die Aufnahme 18 und das Verspannen in der
Aufnahme kann automatisch vorgenommen werden. Die Schrauben
27 und 61 werden bei einer einfachen Ausführungsform
manuell eingeschraubt. Es ist aber möglich, auch diese
Schraubvorgänge mit einem entsprechenden Schraubaggregat
ebenfalls voll automatisch durchzuführen. Dadurch ist
ein voll-automatischer Werkzeugwechsel möglich. Selbstverständlich wird das Werkzeug 9 erst dann axial in seine
Einbaulage verschoben, wenn nach dem Einspannen des
Halters 20 in der Aufnahme 18 die Greifzangen der Greifeinrichtung 11 vom Halter zurückgezogen worden sind.

Das Werkzeug kann in entsprechend umgekehrter Weise aus
der jeweiligen Maschine entfernt werden. Hierzu werden
zunächst die Schrauben 61 gelöst. Sobald ihr Gewindeabschnitt 62 aus der jeweiligen Sacklochbohrung 63 freikommt, werden die Schrauben 61 unter der Kraft der Druckfedern 73 axial weiter verschoben, bis der Gewindeabschnitt am Absatz 71 in den Durchgangsbohrungen 67 der Lagerbuchse 23 zur Anlage kommt. Anschließend wird die zentrale Schraube 27 zurückgedreht, wobei über die Formschlußverbindung 34 bis 36 die Lagerbuchse 23 mit dem Werkzeug 9 mitgenommen wird. Die Lagerbuchse 23 wird so weit axial auf dem Zylinderteil 22 des Halters 20 zurückgeschoben, bis der Stift 55 an der Endwand 56 der Vertiefung 54 anliegt. Das Endstück 38 der zentralen Schraube 27 liegt dann mit der Kegelfläche 40 an der Kegelfläche 96 des Schiebers 79 an. In dieser Lage ist die Lagerbuchse 23 so weit zurückgeschoben, daß die Umfangsrille 75 des Halters 20 frei liegt und von den Greifzangen der Greifeinrichtung 11 erfaßt werden kann. Die Spanneinrichtung in der Arbeitsspindel 8 kann dann gelöst werden, so daß sich der Halter 20 mit dem Werkzeug 9 aus der Aufnahme 18 herausziehen läßt.

Das Werkzeug 9 ist für schwere Zerspanungsarbeiten vorgesehen und hat einen verhältnismäßig großen Arbeitsdurchmesser sowie ein hohes Gewicht. Solche gewichtsmäßig schweren Werkzeuge müssen mit den Schrauben 61 gehaltert werden und können nicht, wie dies bei leichteren Werkzeugen der Fall ist, lediglich auf dem Halter 20 befestigt werden. Infolge der beschriebenen Ausbildung ist es erstmals möglich, solche gewichtsmäßig schweren und groß dimensionierten Werkzeuge mit der Werkzeugwechsel-Einrichtung 11 automatisch auszuwechseln und so in die Arbeitsspindel 8 einzuspannen, daß die Werkzeuge einwandfrei zentriert sind und einen hohen Planlauf aufweisen. Der Werkzeugwechsel läßt sich mit der Greifeinrichtung 11 sehr schnell durchführen, so daß die Stillstandzeiten der Bearbeitungsmaschine bzw. des Bearbeitungszentrums gering gehalten werden können.

Die Lagerbuchse 23 und das Werkzeug 9 sind im Ausführungsbeispiel zwei lösbar miteinander verbundene Teile. Die
Lagerbuchse kann aber auch einstückig mit dem Werkzeug
ausgebildet sein.

Eine der Befestigungsschrauben 61 verläuft durch den
Bereich der Kerbe 77 (Fig. 2, 5 und 6). Der Schieber 79
ist im Halterflansch 21 radial verschiebbar gelagert und
wird beim Verschieben der Lagerbuchse 23 auf dem Halter 20
zwangsläufig so verschoben, daß die entsprechende Schraube
61 trotz der Kerbe 77 in die zugehörige Gewindebohrung
63 der Arbeitsspindel 8 geschraubt werden kann. Der Schieber
79 liegt in einer in Richtung auf den Flansch 42 der
Lagerbuchse 23 offenen, radial verlaufenden Vertiefung 80
im Halterflansch 21 und ist an seinem der Kerbe 77 gegenüberliegenden Ende in halber Breite mit einem Schlitz 81
(Fig. 5 und 6) versehen, der bis zur Stirnseite 82 des
Schiebers verläuft und in eine im Querschnitt teilkreisförmige Ausnehmung 83 mündet. Sie durchsetzt zusammen mit
dem Schlitz 81 den Schieber 79 in Richtung der Achse 46.
Der dem Halterflansch 21 zugewandte Rand der Ausnehmung 83
bildet die Kegelfläche 96. Durch die Ausnehmung 83 des
Schiebers 79 verläuft die zentrale Schraube 27 mit einem
Zwischenstück 84 (Fig. 3 und 6), das das Endstück 38 mit dem
Schraubteil 30 verbindet und kleineren Durchmesser als
diese Teile hat, der kleiner als die Breite des Schlitzes
81 des Schiebers 79 ist. An der der Lagerbuchse 23 zugewandten Seite ist der Schieber 79 mit einem Ansatz 85 versehen (Fig. 3), der axial verläuft und an dem eine Druckfeder 86 abgestützt ist, gegen deren Kraft der Schieber
verschiebbar ist. An der Außenseite des Zylinderteiles 22
des Halters 20 ist ein Widerlager 87 lösbar befestigt, mit
dem die Druckfeder 86 in ihrer Einbaulage gehalten wird.

Befindet sich die Lagerbuchse 23 in ihrer zurückgeschobenen
Lage (unter Hälfte in Fig. 3), dann liegt das Endstück
38 der zentralen Schraube 27 mit ihrer Kegelfläche 40
auf der radial innen liegenden Kegelfläche 96 des Schiebers
79 an (Fig. 3 und 5). Dadurch wird der Schieber 79 gegen
die Kraft der Druckfeder 86 radial nach außen in seine
eine Endstellung verschoben, in der seine radial äußere
Stirnseite 88, in der die Kerbe 77 vorgesehen ist, annähernd eine Fortsetzung des Randes des Halterflansches
21 bildet. In dieser Stellung überdeckt der Schieber 79
teilweise die axial dahinterliegende Sacklochbohrung 63
in der Arbeitsspindel 8. Infolge der miteinander zusammenwirkenden Kegelflächen 40, 96 wird der Schieber 79 in der
äußeren Endlage spielfrei gehalten. Da in der radial
äußeren Endlage des Schiebers 79 das Werkzeug ausgewechselt wird, kann somit sicher verhindert werden, daß
der Schieber 79 beim Werkzeugwechsel hin und her verschoben wird.

Wenn in der beschriebenen Weise die zentrale Schraube 27
zurückgeschraubt wird, um die Lagerbuchse 23 zur Anlage
an der Arbeitsspindel 8 zu bringen, kommt das Endstück
38 der zentralen Schraube mit seiner Kegelfläche 40 von
der Kegelfläche 96 des Schiebers 79 frei. Er wird von
der Druckfeder 86 dabei radial nach innen geschoben. In
der Endlage der zentralen Schraube 27 (obere Hälfte in
Fig. 3) liegt der Schieber 79 unter der Kraft der Druckfeder 86 am zylindrischen Zwischenstück 84 der Schraube
27 an. Da das Zwischenstück 84 kleineren Durchmesser als
das Endstück 38 der Schraube 27 hat, wird der Schieber 79
durch die Druckfeder 86 so weit radial nach innen verschoben, daß er, in Achsrichtung gesehen, die dahinterliegende Gewindebohrung 63 der Arbeitsspindel 8 freigibt,
so daß die entsprechende Schraube 61 ohne Behinderung eingeschraubt werden kann. Infolge des Schiebers 79 ist es
somit möglich, zur Befestigung des Werkzeuges 9 an der
Arbeitsspindel 8 jeweils gleiche Befestigungsschrauben
61 zu verwenden. Das Widerlager 87 für die Druckfeder 86
liegt in einer Vertiefung in der Außenseite des Zylinderteiles 22 des Halters 20, so daß die Lagerbuchse 23 unbehindert auf dem Zylinderteil verschoben werden kann.

Soll das Werkzeug 9 von der Arbeitsspindel 8 abgezogen
werden, werden in der beschriebenen Weise die Befestigungsschrauben 61 gelöst. Anschließend wird die zentrale
Schraube 27 zurückgeschraubt. Hierbei trifft die Kegelfläche 40 des Endstückes 38 auf die Kegelfläche 96 des
Schiebers 79;beim Zurückschrauben der Schraube 27 wird der
Schieber infolge der Kegelflächen 40, 96 radial nach
außen gedrückt, bis er wiederum die in Fig. 5 dargestellte
Endlage erreicht. Dann befindet sich die Kerbe 77 wieder
am Umfang des Halterflansches 21.

Es ist auch möglich, die Kerbe 77 direkt im Halterflansch
21 vorzusehen (Fig. 8). In diesem Falle ist kein Schieber
79 vorgesehen. Damit die entsprechende Schraube 61a
in die zugehörige Gewindebohrung 63 geschraubt werden
kann, ist in diesem Falle vorgesehen, in die Gewindebohrung 63 eine Buchse 89 einzuschrauben, die mit einem
Innengewinde 90 versehen ist. Ihr Durchmesser ist so
klein, daß die Schraube 61a, deren Gewindeabschnitt 62a
einen entsprechend kleinen Durchmesser hat, durch den
Bereich der Kerbe 77 des Halterflansches 21 hindurch in
die Buchse 89 geschraubt werden kann. Bei einer solchen
Ausführungsform wird somit im Bereich der Kerbe 77 eine kleinere Befestigungsschraube 61a benötigt, während die
übrigen Schrauben 61 gleichen Durchmesser haben wie bei
der vorigen Ausführungsform.

Anstelle des Fräsers 9 können auch andere Werkzeuge mit
dem Halter 20 an der Arbeitsspindel 8 befestigt werden.
Beispielsweise können weit ausladende Bohrstangen oder
dergleichen mittels des Halters 20 automatisch gewechselt
werden. Es lassen sich mit der beschriebenen Halterausführung alle Werkzeuge automatisch wechseln, die infolge
ihres hohen Gewichtes mit Schrauben an der Spindel 8
gehaltert werden müssen.

Gebr. Heller Maschinenfabrik
Gesellschaft mit
beschränkter Haftung

A I-8 / 257/spo
09.03.1987

0237040

## Ansprüche

1. Werkzeug für Werkzeugwechsel-Maschine, mit einem in eine Aufnahme einer Arbeitsspindel der Maschine steckbaren Halter, der mit einer Umfangsnut für Greiferteile einer Greifeinrichtung versehen ist und einen Kegelschaft aufweist, mit dem er in die Aufnahme der Arbeitsspindel steckbar ist, an der das Werkzeug in seiner Arbeitslage axial abgestützt und befestigt ist, das zwischen der Arbeitslage und der für den Werkzeugwechsel vorgesehenen Lage verstellbar ist, d a d u r c h   g e k e n n z e i c h n e t, daß das Werkzeug (9) auf dem Halter (20) zwischen der Arbeitslage und der Werkzeugwechsel-Lage axial verschiebbar gelagert ist, daß die Umfangsnut (75) in der Arbeitslage des Werkzeuges (9) im Bereich außerhalb der Arbeitsspindel (8) liegt und vom Werkzeug (9) überdeckt ist, das in der Werkzeugwechsel-Lage die Umfangsnut (75) freigibt und über mindestens einen Formschlußteil (27) mit dem Halter (20) in der Arbeitslage fest verbunden ist, und daß der Formschlußteil (27) zusammen mit dem Werkzeug (9) gegenüber dem Halter (20) aus der Arbeitslage in eine Freigabestellung verstellbar ist, in der das Werkzeug (9) seine Werkzeugwechsel-Lage einnimmt.

2. Werkzeug nach Anspruch 1,
dadurch gekennzeichnet, daß der Formschlußteil (27) eine in den Halter (20) geschraubte Schraube ist, die
mit dem Werkzeug (9) in Achsrichtung formschlüssig
verbunden ist.

3. Werkzeug nach Anspruch 2,
dadurch gekennzeichnet, daß die Schraube (27) zentral
im Werkzeug (9) und im Halter (20) angeordnet ist.

4. Werkzeug nach einem der Ansprüche 1 bis 3, das auf
einer Lagerbuchse sitzt,
dadurch gekennzeichnet, daß die Lagerbuchse (23) axial
verschiebbar auf dem Halter (20) geführt ist.

5. Werkzeug nach Anspruch 4,
dadurch gekennzeichnet, daß die Lagerbuchse (23) in
Achsrichtung formschlüssig mit dem Formschlußteil (27)
verbunden ist.

6. Werkzeug nach Anspruch 4 oder 5,
dadurch gekennzeichnet, daß die Lagerbuchse (23) in der
Arbeitsstellung die Umfangsnut (75) des Halters (20)
überdeckt.

7. Werkzeug nach einem der Ansprüche 4 bis 6, bei dem die
Lagerbuchse in der Arbeitsstellung mit einer senkrecht
zur Achse der Arbeitsspindel liegenden Stirnseite an
einer entsprechenden Stirnseite der Arbeitsspindel
anliegt,
dadurch gekennzeichnet, daß die Lagerbuchse (23) in
Achsrichtung Abstand vom Halter (20) hat.

8. Werkzeug nach einem der Ansprüche 1 bis 7,
dadurch gekennzeichnet, daß das Werkzeug (9) mit in
Richtung auf ihre Lösestellung federbelasteten
Schrauben (61) an der Arbeitsspindel (8) befestigt ist.

9. Werkzeug nach Anspruch 8,
   dadurch gekennzeichnet, daß die Schrauben (61) von
   Druckfedern (73) umgeben sind, die mit einem Ende an
   einem Bund (74) der Schrauben (61) und mit dem anderen
   Ende an der Lagerbuchse (23) abgestützt sind.

10. Werkzeug nach einem der Ansprüche 1 bis 9,
    dadurch gekennzeichnet, daß der Halter (20) im
    Umfangsbereich sowie im Bereich der Umfangsnut (75)
    eine für die Greifeinrichtung (11) vorgesehene
    Ausnehmung (77) aufweist, die in einem quer zur Achse
    (46) des Halters (29) verstellbaren Teil (79)
    vorgesehen ist, der eine Gewindebohrung (63) in der
    Arbeitsspindel (8) für eine der Schrauben (61) bei
    axial verschobenem Werkzeug (9) teilweise überdeckt.

11. Werkzeug nach Anspruch 10,
    dadurch gekennzeichnet, daß der Stellteil (79) ein
    senkrecht zur Achse (46) des Halters (20) verstellbarer
    Schieber ist, in dessen radial äußerer Stirnseite (88)
    die Ausnehmung (77) vorgesehen ist.

12. Werkzeug nach Anspruch 10 oder 11,
    dadurch gekennzeichnet, daß der Stellteil (79) eine im
    Querschnitt schräg verlaufende Fläche (96) aufweist,
    die bei radial nach innen verstelltem Stellteil (79) im
    Bewegungsweg des Formschlußteiles (27) liegt.

13. Werkzeug nach einem der Ansprüche 10 bis 12,
    dadurch gekennzeichnet, daß der Stellteil (79) durch
    den Formschlußteil (27) radial nach außen gegen
    Federkraft verschiebbar ist.

14. Werkzeug nach einem der Ansprüche 1 bis 13,
    dadurch gekennzeichnet, daß der Formschlußteil (27) mit
    einer Kegelfläche (40) versehen ist, die mit der auf
    einem Kegelmantel liegenden Fläche (96) des Stellteiles
    (79) zusammenwirkt.

Fig. 1

Fig.2

0237040

Fig.3

0237040

Fig.4

Fig.6

Fig.5

Fig.7

0237040

VII

VII

61a

62a

21

77

63

89

90

Fig.8